# EUROPEAN PATENT APPLICATION

(11) **EP 3 985 430 A1**
(43) Date of publication of application: **20.04.2022**
(21) Application number: 20202508.6
(22) Date of filing: 19.10.2020
(51) Int. Cl.: G02F 1/153, G02F 1/13357, G02F 1/13, G02F 1/01

(54) **DEVICE AND METHOD FOR CONTROLLING THE EXPOSURE OF A SAMPLE TO LIGHT**

(71) Applicant: Ningaloo GmbH, 50937 Köln (DE)
(72) Inventor: Müller-Hartmann, Herbert, Dr., 50937 Köln (DE); Schmidt, Hanns-Martin, Dr., 50733 Köln (DE)
(74) Representative: Remus, Alvaro Johannes

(57) **Abstract**

The invention concerns a device 1 for controlling an exposure of at least one chemical and/or biological sample to light, the device 1 comprising a multitude of cavities 2, each cavity 2 representing an internal space 3 being capable of holding the chemical and/or biological sample. The internal spaces 3 are each partially surrounded by a wall element 4 comprising windows 5 for observing and/or illuminating the internal spaces 3. In order to protect the internal spaces 3 from the ingress of light, the wall element 4 comprises a light-proof material. Each window 5 comprises at least one switchable element 8 being of switchable color and/or light transmittance. By the switchable elements 8, light exposure of the chemical and/or biological sample in the internal space 3 of each cavity 2 can be controlled so that unintended light exposure can be effectively avoided when illumination of the sample does not occur and/or the device 1 is stored or transported.

## Description

### Field of the invention

The invention relates to a device comprising at least one internal space which is designed to hold at least one chemical and/or biological sample or which is designed to comprise at least one container designed to hold at least one chemical and/or biological sample, the internal space being at least partially surrounded by at least one wall element and, except for at least one window for observing and/or illuminating the internal space, protected from the ingress of light by at least one light-proof material. The invention further relates to a method for controlling an exposure of at least one chemical and/or biological sample to light, wherein the sample is protected from light by at least one light-proof material and can be observed and/or illuminated through at least one window.

### Background of the invention

Optogenetics is a technology combining the use of light and genetically encoded light-sensitive proteins to control the behavior of living cells and organisms. Optogenetic technology is increasingly applied in many laboratories around the world and has become a booming field thanks to several technological developments. For example, the search for light-sensitive proteins capable of controlling particular cellular behaviors has yielded a diverse set of tools with different functionalities [1]. However, although progress in the light-delivery technologies, particularly in microscopy, has enabled unprecedented control over in vitro and in vivo illumination, standardized and useful laboratory equipment for employing this promising technology is still not available in the market. While to date self-made devices dominate the laboratory and industrial landscape, there is thus an increasing need for technically mature and user-optimized laboratory equipment for employing this promising technology.

Olsen et al. (2014) disclose a method for controlling gene expression dynamics with light using a device that contains independently programmable blue, green, red and far-red LEDs that deliver calibrated intensities of each wavelength to each of 64 standard test tubes. The device allows optical signals to be sent into exponentially growing bacterial cultures in a shaking incubator. To this end, an array of individually controlled LEDs is disposed underneath the test tubes and used to deliver programmed light inputs to the bacterial cultures therein, wherein each culture tube is optically isolated with an opaque foam [2].

Gerhardt et al. (2016) disclose a device for delivering two independent light signals to each well of a 24-well culture plate, including a printed circuit board (PCB) outfitted with a Secure Digital (SD) card reader, a microcontroller, 3 LED drivers, 48 solder-free LED sockets, a power regulating circuit, and other standard electronics components. A chassis houses the assembled PCB and 24-well plate. The LEDs are arranged on the PCB which is mounted to a mounting plate disposed underneath the 24-well plate. The black-walled 24-well plate has a transparent plastic bottom and is aligned and held in place by a plate adapter. An adhesive foil plate cover provides a sealed environment for each well. Laser cut nitrile gaskets are placed at each of the interfaces above the PCB to reduce optical contamination. A lid is placed atop the plate and the complete assembly is secured with wing nuts [3].

US 2018/0016538 A1 discloses apparatus, systems and methods relating to an illumination opto-plate configured to specifically illuminate the wells of a cell culture plate. The apparatus has a base and a plate adaptor that are configured to be used in conjunction with a 96-well plate or other common culture plates, such as 6-well, 12-well, 24-well, 48-well, 384-well plates. The culture plate is placed atop the adaptor such that various openings defined in the adaptor that correspond to LED fixtures are disposed below corresponding wells on the tissue culture plate. The thin profile of the opto-plate allows for use in an incubator or with a microscope.

However, none of the prior art devices allows for controlled protection from light ingress to the inner space before and/or after illumination or easy and controlled observation of the inner space before, during and/or after illumination without the need to disassemble the whole device.

### Summary of the invention

It is the object of the invention to provide a device and related method as initially specified, which allows the easy and controlled protection of biological or chemical samples from light ingress, in particular ambient light ingress, before and/or after illumination, even after disassembly of or removal from an additional device used to process or analyze said samples, and the easy and controlled observation of the inner space before, during and/or after illumination without the need to disassemble the whole device.

The object is achieved by a device as initially specified, wherein the window comprises at least one switchable element being of switchable color and/or light transmittance. That is, by the switchable element the window can be easily switched between a first state ("closed state"), wherein light is blocked off from the internal space, and at least a second state ("active state"), wherein light can pass through the window into and out of the internal space in a controlled manner. Light exposure of the chemical and/or biological sample in the internal space can thus be controlled by the switchable element in order to avoid unintended light exposure during "off-phases" (i.e. when illumination of the sample does not occur or when the samples are stored or transported) or tune light exposure during "on-phases" (i.e. when the sample is illuminated). The switchable element is designed to change color and/or gain transmittance and/or transparency upon switching from the first state to the second state. The first ("closed") state allows for energy-neutral, power-off, and thus non-wired light protection during transportation or storage of the device. In the second ("active") state a user or an instrument can "open the shades" for visual inspection or electromagnetic irradiation of the chemical and/or biological sample(s) contained inside the device's internal space. Outside specific environments where controlled illumination shall occur, the window is "closed" to the ingress of light or at least to a specific chemically or biologically active wavelength to protect the chemical and/or biological material from unintended illumination, e.g. by ambient light, sunlight exposure or the like.

Accordingly, the device according to the invention allows for easy and controlled protection of the inner space before and/or after illumination, even after disassembly of or removal from the illumination device, as well as easy and controlled observation of the inner space before, during and/or after illumination without the need to disassemble the whole device.

For example, the device according to the invention may be a vessel, plurality of vessels, container, encasing, box, photoreactor or bioreactor for harboring chemical and/or biological samples. The device is preferably designed to have a light-proof body or other features that convey protection from light. The at least one window for observing and/or illuminating the internal space can be disposed in the wall element and/or the light-proof material. The switchable element may be designed to change color and/or gain transmittance and/or transparency upon a signal delivered from an instrument that actively opens the window for optically accessing the sample(s) in the second state and closes the window in the first state. Preferably, switching is accomplished in response to electrical signals applied by the device's electronics (e.g. at least one control unit). The switchable element can be part of and/or attached to a light panel of an illumination device, the container, an encasing or box wall for containing of the plate itself (e.g. preferably on the bottom or top of a cell culture plate).

For example, the container may be a cell culture vessel or components thereof such as multiwell plates, dishes, lids, flasks, culture bags, liners, bioreactors.

In an advantageous embodiment of the invention, the switchable element comprises at least one electrochromic material. Basically, electrochromic materials are based on redox reactions that convert non-absorbing molecules into light absorbing states and vice versa. Electrical currents are applied to the device to induce these transitions, but are not required to maintain the status of the device. They thus have a memory effect. Preferably, the switchable element is equipped with electrochromic materials, e.g. tungsten trioxide, formed by an electrochromic panel that can be switched between an opaque and a clear state by applying a lower voltage.

In another advantageous embodiment of the invention, the switchable element comprises at least two different electrochromic materials. Different electrochromic materials can be used to block different parts of the light spectrum.

In a further advantageous embodiment of the invention, the switchable element is a liquid crystal display (LCD) or an independently controlled segment of an LCD. Basically, LCDs are based on orientation of microscopic crystals that is maintained by an electrostatic field. Given their broad use and industrialization, LCDs are a very attractive alternative to employ. For example, the liquid crystal display (LCD), of either one pixel or multiple pixels, might allow switching a subset of containers (e.g. wells of a multi-well plate) to the active state while other containers (wells) are still in the closed state and thus protected from light. LCDs can be switched by an instrument on demand once, for example, an optogenetic light exposure program starts. Advantageously, multiple pixel LCDs allow to reduce light cross-contamination from container (well) to container (well), in case only one container (well) shall be illuminated and/or observed at a given time.

In a further advantageous embodiment of the invention, the switchable element comprises at least one light shutter. The light shutter works like a mechanic "shade" that is opened for optically accessing the sample(s) in the second state and closed for protection of the sample(s) in the first state. For example, the switchable element may comprise a mechanically operated manual shutter for round culture vessels like Petri dishes.

In another advantageous embodiment of the invention, the switchable element comprises at least two polarization filters, one of which being fixed and the other one being turnable in its plane. For example, two polarization filters can be combined, wherein one is fixed and one can be turned in its plane by 90 degrees to switch between transparent and nontransparent positions (i.e. active and closed state).

In a further advantageous embodiment of the invention, the device further comprises two or more internal spaces and two or more windows, wherein at least two of the internal spaces are each provided with at least one window, and wherein the at least one switchable element of each window is switchable independently. It is thus possible to allow the ingress of light into one or more internal spaces of a device while the other internal spaces are still protected from the ingress of light. Accordingly, each internal space of the device can be selectively observed and/or treated without affecting the other internal spaces.

In another advantageous embodiment of the invention, the container comprises two or more cavities designed to hold the at least one chemical and/or biological sample, each cavity being provided with at least one window, and wherein the at least one switchable element of each window is switchable independently. It is thus possible to allow the ingress of light into one or more cavities of a container (e.g., a multiwall plate) while the other cavities are still protected from the ingress of light. Accordingly, each cavity of the container can be selectively observed and/or treated without affecting the other cavities.

In a further advantageous embodiment of the invention, the device further comprises at least one illumination means for illuminating the chemical and/or biological sample in the internal space. That is, the illumination means can be integrated in the device as an internal light source, for example, for active illumination control through the switchable element. In a preferred embodiment the illumination means comprises at least one light emitting diode (LED). Alternatively, the light source can be independent and the switchable element may be, for example, attached to the sample container. In such alternative embodiment the light protection (or light color selection) function of the device according to the invention can be independent from the active illumination situation so that the switchable element cannot be used to control the illumination means (LED).

In another advantageous embodiment of the invention, the switchable element comprises or is coupled with at least one control element for controlling the illumination means and/or the illumination of the chemical and/or biological sample in the internal space. Accordingly, illumination of the sample(s) can be controlled by the switchable element through a control element (control unit), e.g., by adjusting the wavelength (color) and/or intensity of the ingressing light, in particular in accordance to an active illumination program.

In a further advantageous embodiment of the invention, the wall element comprises at least two parts that are attached to each other by at least one interlockable connecting structure comprising a light-tight but gas-permeable opening. The opening may be a meander-shaped channel and/or comprise at least one gas-permeable filter element. The connecting structure between the two parts (e.g., a lid and the bottom of the device) forms a gas-permeable but light-tight opening so that ventilation of the internal space is possible without allowing light from the outside to enter the internal space. The gas permeable opening may be of interlocked or mazelike design, wherein the gas path may have a curved form. In order to avoid contamination of the internal space, the opening can be equipped with a gas permeable filter, for example, composed of fibrous or granulated material that is light tight, in particular with a transmittance of <0.01, usually achieved through a combination of light scattering and absorption by the filter material. Alternatively, the wall element can be equipped with at least one ventilation means, e.g. a gas inlet or outlet, that actively ventilates the inner volume of the box, and that is a light barrier. For instance, the gas inlet or outlet can be equipped with a centrifugal fan.

The device according to the invention may comprise a plurality of independent chemical and/or biological samples in independent containers or in separate regions of one or more container(s) (e.g., wells of a multiwell plate or spots of a microarray/biochip), wherein one switchable element (light shutter) controls the light ingress for all samples simultaneously. Preferably, a number of switchable elements lower than the number of samples control the light ingress to groups of samples. Alternatively, the same number of switchable elements control the light ingress to each sample individually.

The invention also comprises a device, container, encasing or box to harbor a container containing chemical or biological sample(s), which is light-tight and equipped with said element (window) switchable for color and/or light transmittance. This device, container, encasing or box may be mobile or portable, allowing for transportation of the sample(s) under light protected conditions. Control elements, such as electric, electromagnetic/radio or mechanical inputs can be received through means of a plug connection or socket with the operator or an instrument, e.g. an illumination device. The electrically switchable elements (light shutters) that are closed for light passage allow for power-free transportation in the light-protected (closed) state, and upon application of an electrical signal or voltage become transparent or translucent in the active state.

For example, in plates, lids, flasks, culture bags, liners, bioreactors with at least one window that allows controlled light irradiation of the at least one sample, the switchable window can be the element to control timing of the light exposure. This could be particularly beneficial in multiwell formats, wherein plates with wells equipped with switchable elements (e.g. LCDs) are disposed on a constantly illuminated LED panel or other light source and timing or intensity of light exposure is regulated by switching the LCD pixels (one per sample/well or pluralities of pixels at the same time, resembling the shape of the well).

The invention further comprises a device, container, encasing or box for the culturing of cells that contains a switchable element (as described above) to protect biological samples from unintended exposure to light from the outside, allows illumination with light produced outside the device, container, encasing or box, wherein light can be controlled through the switchable element. In case said switchable element is a light shutter, said light shutter can be part of or integrated into a gas-permeable opening.

The object is achieved by a method as initially specified, wherein color and/or light transmittance of the window is changed by means of at least one control unit, wherein said color and/or light transmittance can be switched between at least two states, a first state preventing light exposure of the sample and at least one second state allowing the exposure of the sample to light. That is, by the control unit the window (e.g., through a switchable element) can be easily switched between the first state ("closed state"), wherein light is blocked off from the sample(s), and the second state ("active state"), wherein light can pass through the window into and out of the internal space in a controlled manner.

Light exposure of the chemical and/or biological sample can thus be controlled by the control unit in order to avoid unintended light exposure during "off-phases" (i.e. when illumination of the sample does not occur or when the samples are stored or transported) or tune light exposure during "on-phases" (i.e. when the sample is illuminated). According to the invention the window can be controlled to convey gradual transmittance and/or transparency, allowing to dim the ingress and sample's exposure of light to a desired level. This can be used in an advantageous manner to calibrate the actual light exposure experienced by the sample(s). Outside specific environments where controlled illumination shall occur, the window can be "closed" to the ingress of light or at least to a specific chemically or biologically active wavelength to protect the sample(s) from unintended illumination, e.g. by ambient light, sunlight exposure or the like. Accordingly, the method according to the invention allows for easy and controlled protection of the inner space before and/or after illumination, even after disassembly of the device, as well as easy and controlled observation of the inner space before, during and/or after illumination without the need to disassemble the whole device.

"Illumination" or "illuminating" as used herein refers to the irradiation of a space, object or sample with light, including but not limited to an active treatment of the space, object or sample with light or the passive exposure of the space, object or sample to light, the latter including a visual inspection or analysis of the space, object or sample.

"Light" as used herein refers to electromagnetic radiation of any wavelength, including both visible and non-visible light, gamma rays, X-rays, microwaves, and radio waves. Visible light has wavelengths in the range of 400-700 nanometers (nm), i.e. between the infrared and the ultraviolet radiation. Infrared (IR) radiation has wavelengths longer than those of visible light, extending from 700 nanometers to 1 millimeter. Ultraviolet (UV) radiation has wavelengths shorter than that of visible light but longer than X-rays, extending from 10 nm to 400 nm.

"Color" as used herein refers to the physical property of different transmittance of a translucent material for different wavelengths of the light spectrum, thus wavelength selectivity of the translucent material, as well as to the light having passed this material and as a result having a changed wavelength spectrum as compared to the incoming light.

"Transmittance" or "light transmittance" as used herein refers to the physical property of allowing the transmission of light through a material, thus non-selectivity regarding wavelengths, acting in the same function as a neutral-density filter. "Transmittance" as used herein includes both "transparency" and "translucency". Transparency is the physical property of allowing light to pass through the material without or almost without scattering of light. Translucency (translucence) is the physical property of allowing light to pass through the material, wherein the light is scattered within or at the surfaces of the material due to a change in the index of refraction.

### Brief description of the drawings

**Figure 1** shows a schematic representation (longitudinal section) of an exemplary embodiment of a device according to the invention, wherein the device is a multi-well plate.
**Figure 2** shows a schematic representation (longitudinal section) of another exemplary embodiment of a device according to the invention, wherein a multi-well plate is disposed within the device.
**Figure 3** shows a schematic representation (longitudinal section) of a further exemplary embodiment of a device according to the invention comprising illumination means, wherein a cell culture flask is disposed within the device.
**Figure 4** shows a schematic representation (longitudinal section) of another exemplary embodiment of a device according to the invention, wherein the device is a bioreactor.
**Figure** 5 shows a schematic representation (longitudinal section) of a further exemplary embodiment of a device according to the invention comprising illumination and ventilation means, wherein a multi-well plate is disposed within the device.

### Description of exemplary and preferred embodiments of the invention

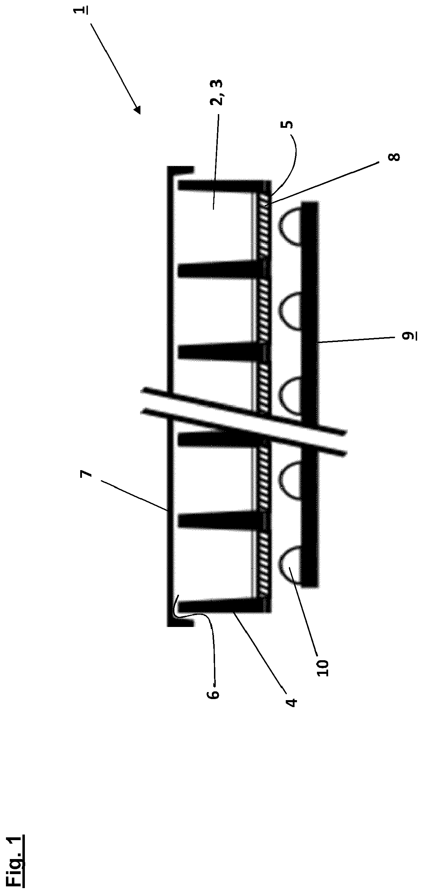

**Figure** 1 shows an exemplary embodiment of a device 1 according to the invention. The device 1 comprises a multitude of cavities 2 ("wells"), each cavity 2 representing an internal space 3 being capable of holding a chemical and/or biological sample. The cavities 2 / internal spaces 3 are each partially surrounded by a wall element 4 which is open at the top of each internal space 3. At the bottom of each internal space 3, the wall element 4 comprises windows 5 for observing and/or illuminating the internal spaces 3. The chemical and/or biological sample can be introduced into the internal space(s) 3 through opening(s) 6. The openings 6 are covered by a lid 7 extending to all cavities 2. In order to protect the internal spaces 3 from the ingress of light, the wall elements 4 and the lid 7 comprise a light-proof material. Each window 5 comprises at least one switchable element 8 being of switchable color and/or light transmittance. Each switchable element 8 can be switched between a first state ("closed state") and one or more second state(s) ("active state"). In the closed state light is blocked off from the internal space 3, while in the active state light can pass through the window 5 into and out of the internal space 3 in a controlled manner. By the switchable elements 8, light exposure of the chemical and/or biological sample in the internal space 3 of each cavity 2 can thus be controlled so that unintended light exposure can be effectively avoided when illumination of the sample does not occur and/or the device 1 is stored or transported. Moreover, light exposure of the chemical and/or biological sample in the internal space 3 can be tuned by the switchable element 8 when the sample is illuminated. In an advantageous embodiment of the invention, it may also be possible to observe the chemical and/or biological sample in the internal space 3 through an "open" window 5 by switching the corresponding switchable element 8 from the closed to the active state. Illumination of the internal spaces 3 is employed by means of an external light bar or array 9 comprising a multitude of illumination means 10 (e.g. LEDs), each of which being disposed underneath a window 5.

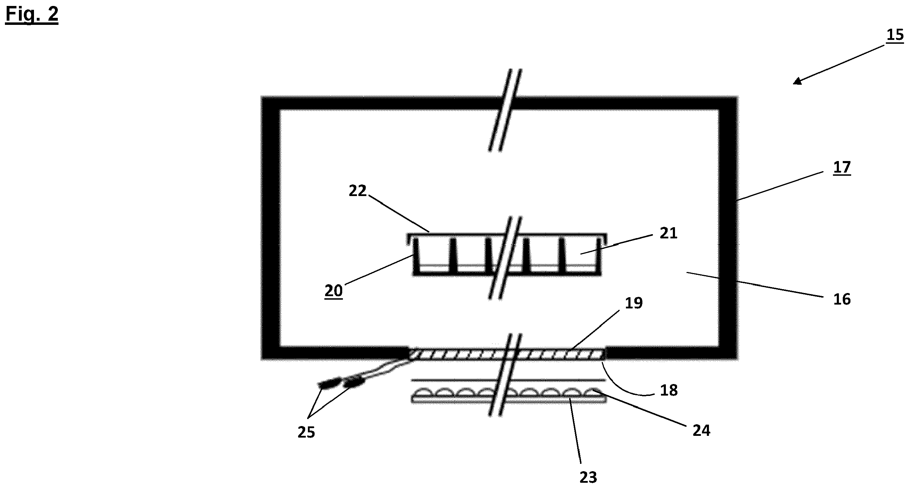

**Figure 2** shows another exemplary embodiment of a device 15 according to the invention. The device 15 comprises an internal space 16 which is surrounded by a wall element 17 comprising a light-proof material that protects the internal space 16 from the ingress of light. At the bottom of the device 15, the wall element 17 further comprises a windows 18 for observing and/or illuminating the internal space 16. The window 18 comprises a switchable element 19 being of switchable color and/or light transmittance. For example, the switchable element 19 may be a LCD panel or the like. The switchable element 19 can be switched between a first state ("closed state") and one or more second state(s) ("active state"). In the closed state light is blocked off from the internal space 16, while in the active state light can pass through the window 18 into and out of the internal space 16 in a controlled manner.

A container 20 is placed within the internal space 16 of the device 15. The container 20 is designed to hold at least one chemical and/or biological sample, for example, a suspension including living cells. The container 20 may be a standard cell culture vessel comprising a plurality of cavities 21 ("wells"), for example, a 6-, 12-, 24- or 96-well plate. The cavities 21 of the container 20 are covered by a lid 22. By the switchable element 19, light exposure of the chemical and/or biological samples (cells) in the cavities 21 of the container 20 can be controlled so that unintended light exposure can be effectively avoided when illumination of the inner space 16 does not occur and/or the device 15 is stored or transported. Moreover, light exposure of the chemical and/or biological samples in the container 20 can be tuned by the switchable element 19 when the inner space 16 is illuminated from the outside. In an advantageous embodiment of the invention, it may also be possible to observe the cells in the container 20 through the window 18 by switching the switchable element 19 from the closed to the active state. Illumination of the internal space 16 is employed by means of an external light source, bar or array 23 comprising at least one of illumination means 24 (e.g. LEDs) that are disposed underneath the switchable element 19. The switchable element 19 is coupled to an electronic control unit (not shown) via contact elements 25 so that it can be easily switched between the closed and the active state. If the switchable element 19 comprises an electrochromic material, electrical currents can be applied to the material via the contact elements 25 to induce the desired state transitions.

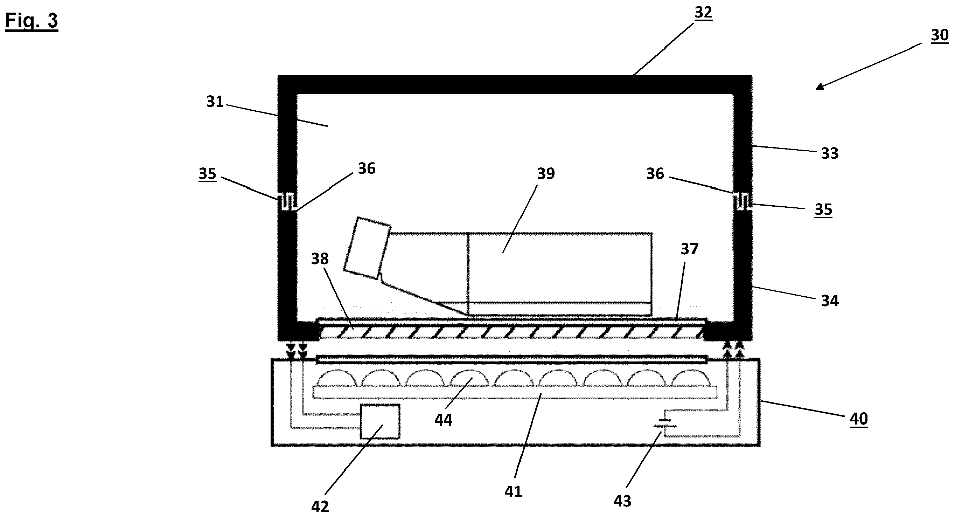

**Figure 3** shows a further exemplary embodiment of a device 30 according to the invention. The device 30 comprises an internal space 31 which is surrounded by a wall element 32 comprising a light-proof material that protects the internal space 31 from the ingress of light. In this advantageous embodiment, the wall element 32 includes two parts 33, 34 that are attached to each other by at least one interlockable connecting structure 35 comprising a light-tight but gas-permeable opening 36 permitting ventilation of the internal space 31 without allowing light from the outside to enter the internal space 31. In this embodiment, the opening 36 is a meander-shaped channel. At the bottom of the device 30, the wall element 32 further comprises a window 37 for observing and/or illuminating the internal space 31. The window 37 comprises a switchable element 38 being of switchable color and/or light transmittance. For example, the switchable element 38 may be a LCD panel or the like. The switchable element 38 can be switched between a first state ("closed state") and one or more second state(s) ("active state"). In the closed state light is blocked off from the internal space 31, while in the active state light can pass through the window 37 into and out of the internal space 31 in a controlled manner.

A container 39 is placed within the internal space 31 of the device 30. The container 39 is designed to hold at least one chemical and/or biological sample, for example, a suspension including living cells. The container 39 may be a standard cell culture flask. By the switchable element 38, light exposure of the chemical and/or biological sample (cells) in the container 39 can be controlled so that unintended light exposure can be effectively avoided when illumination of the inner space 31 does not occur and/or the device 30 is stored or transported. Moreover, light exposure of the chemical and/or biological sample in the container 39 can be tuned by the switchable element 38 when the inner space 31 is illuminated from the outside. In an advantageous embodiment of the invention, it may also be possible to observe the cells in the container 39 through the window 37 by switching the switchable element 38 from the closed to the active state. The device 30 is coupled to an external illumination unit 40 comprising a light source, bar or array 41, a control element 42, and a power source 43. The light bar 41 comprises a plurality of illumination means 44 (e.g. LEDs) that are disposed underneath the switchable element 38 for illuminating the internal space 31.

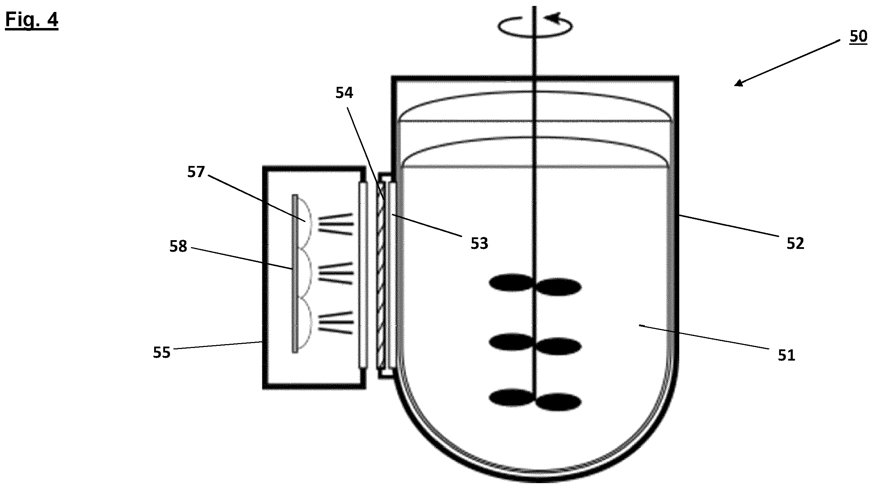

**Figure 4** shows another exemplary embodiment of a device 50 according to the invention. The device 50 is a stirred bioreactor comprising an internal space 51 which is surrounded by a wall element 52 comprising a light-proof material that protects the internal space 51 from the ingress of light. The device 50 is designed to hold in its internal space 51 a chemical and/or biological sample, for example, a suspension including living cells. On at least one side of the device 50, the wall element 52 comprises a window 53 for observing and/or illuminating the internal space 51. The window 53 is covered at the outside by a switchable element 54 being of switchable color and/or light transmittance. For example, the switchable element 54 may be a LCD panel or the like. The switchable element 54 can be switched between a first state ("closed state") and one or more second state(s) ("active state"). In the closed state light is blocked off from the internal space 51, while in the active state light can pass through the window 53 into and out of the internal space 51 in a controlled manner. By the switchable element 54, light exposure of the chemical and/or biological sample (cells) in the internal space 51 can be controlled so that unintended light exposure can be effectively avoided when illumination of the inner space 51 does not occur and/or the device 50 is stored or transported. Moreover, light exposure of the chemical and/or biological sample in the in the internal space 51 can be tuned by the switchable element 54 when the inner space 51 is illuminated. In an advantageous embodiment of the invention, it may also be possible to observe or otherwise optically measure properties of the cells or the cell culture medium in the internal space 51 through the window 53 by switching the switchable element 53 from the closed to the active state. The internal space 51 of the device 50 can be illuminated by an external illumination unit 55 comprising a light source, bar or array 56 being equipped with illumination means 57. The illumination means can for example emit light of different spectral characteristics or wavelengths.

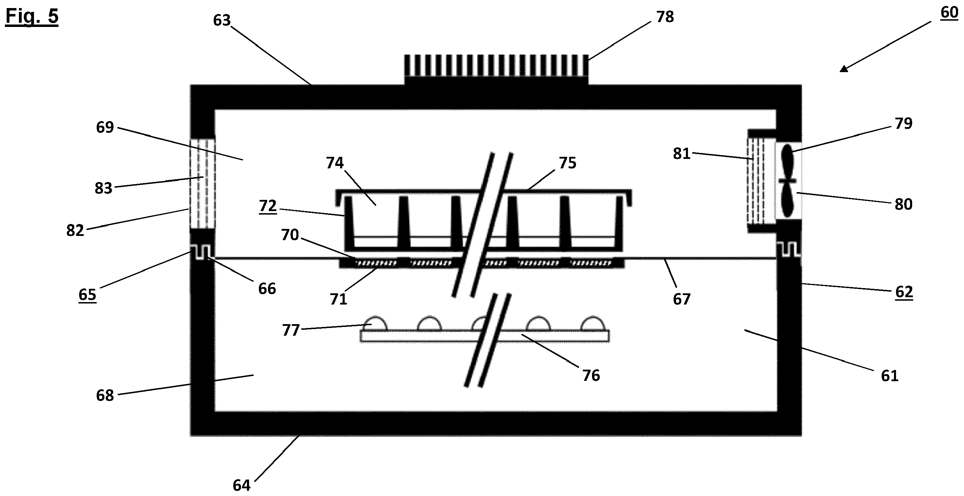

**Figure 5** shows a further exemplary embodiment of a device 60 according to the invention. The device 60 comprises an internal space 61 which is surrounded by a wall element 62 comprising a light-proof material that protects the internal space 61 from the ingress of light. In this advantageous embodiment, the wall element 62 includes two parts 63, 64 that are attached to each other by at least one interlockable connecting structure 65 comprising a light-tight but gas-permeable opening 66 permitting passive ventilation of the internal space 61 without allowing light from the outside to enter the internal space 61. In this embodiment, the opening 66 is a meander-shaped channel. A separating plate 67 is disposed within the internal space 61, dividing the internal space 61 into a lower internal space 68 and an upper internal space 69. The separating plate 67 is made of a light-proof material and comprises (at least one) or several windows 70 for observing and/or illuminating the upper internal space 69. The windows 70 each comprise a switchable element 71 being of switchable color and/or light transmittance, which is disposed underneath or in openings in the separating plate 67 in the lower internal space 68. For example, each switchable element 71 may comprise an optics layer comprising an electrochromic material (e.g. tungsten trioxide) wherein redox reactions convert non-absorbing molecules into light absorbing states and vice versa. Electrical currents can be applied to the material to induce these transitions, but are not required to maintain the status of the material. They thus have a memory effect. Accordingly, each switchable element 71 is equipped with an electrochromic optics layer that can be independently switched between an opaque and a clear state by applying a lower voltage. In the opaque state light is blocked off from the upper internal space 69, while in the clear state light can pass through the windows 70 into and out of the upper internal space 69 in a controlled manner.

A container 72 is placed on the separating plate 67 within the upper internal space 69 of the device 60. The container 72 is designed to hold at least one chemical and/or biological sample, for example, a suspension including living cells. The container 72 may be a standard cell culture vessel comprising a plurality of cavities 74 ("wells"), for example, a 24- or 96-well plate. The cavities 74 of the container 72 are covered by a lid 75. Illumination of the upper internal space 69 is employed by means of an internal light source, bar or array 76 comprising a plurality of illumination means 77 (e.g. LEDs). The internal light bar 76 is disposed underneath the switchable elements 71 within the lower internal space 68, wherein the illumination means 77 are aligned underneath the windows 70. Light exposure of the chemical and/or biological samples (cells) in each cavity 74 of the container 72 can be tuned independently by the corresponding switchable element 71 when the upper inner space 69 is illuminated by the illumination means 77. In an advantageous embodiment of the invention, it may also be possible to observe the cells in the container 72 through the windows 70 via at least one camera (not shown) by switching the switchable elements 71 from the opaque to the clear state.

The device 60 further comprises cooling fins 78 for passive cooling of the inner space 61 and a fan 80 for active ventilation of the upper internal space 69. The cooling fins 78 are disposed on the top of the upper part 63 of the wall element 62 at the outside of the device 60. The fan 79 is arranged in a first ventilation opening 80 which is covered within the upper internal space 69 by a gas-permeable first filter element 81 being designed to avoid contamination of the internal space 61. At least one of the fan 79 and the filter element 81 is light-tight so as to protect the internal space 61 from the ingress of light. For pressure compensation, a second ventilation opening 82 is disposed opposite to the first ventilation opening 80. The second ventilation opening 82 is equipped with a light-tight but gas-permeable second filter element 83 being designed to avoid contamination of the internal space 61 as well. The active ventilation system allows for maintaining optimal conditions for, e.g., cultivating living cells, within the upper internal space 69, e.g. when the device 60 is positioned in a cell culture incubator providing an atmospheric environment controlled for its gas composition, temperature and humidity.

### References:

1. Anonym: Method of the Year 2010, Nature Methods VOL. 8 NO. 1, JANUARY 2011, 1-1, published online 20 December 2010, doi:10.1038/nmeth.f.321.
2. Evan J. Olson, Lucas A. Hartsough, Brian P. Landry, Raghav Shroff & Jeffrey J. Tabor: Characterizing bacterial gene circuit dynamics with optically programmed gene expression signals, Nature Methods VOL.11 NO.4, APRIL 2014, 449.
3. Karl P. Gerhardt, Evan J. Olson, Sebastian M. Castillo-Hair, Lucas A. Hartsough, Brian P. Landry, Felix Ekness, Rayka Yokoo, Eric J. Gomez, Prabha Ramakrishnan, Junghae Suh, David F. Savage & Jeffrey J. Tabor: An open-hardware platform for optogenetics and photobiology, Scientific Reports 6:35363, DOI: 10.1038/srep35363.

## Claims

1. Device (1, 15, 30, 50, 60) comprising at least one internal space (3, 16, 31, 51, 61) which is designed to hold at least one chemical and/or biological sample or which is designed to comprise at least one container (20, 39, 72) designed to hold at least one chemical and/or biological sample, the internal space (3, 16, 31, 51, 61) being at least partially surrounded by at least one wall element (4, 17, 32, 52, 62) and, except for at least one window (5, 18, 37, 53, 70) for observing and/or illuminating the internal space (3, 16, 31, 51, 61), protected from the ingress of light by at least one light-proof material, **characterized in that** the window (5, 18, 37, 53, 70) comprises at least one switchable element (8, 19, 38, 54, 71) being of switchable color and/or light transmittance.

2. Device according to claim 1, wherein the switchable element (8, 19, 38, 54, 71) comprises at least one electrochromic material.

3. Device according to claim 2, wherein the switchable element (8, 19, 38, 54, 71) comprises at least two different electrochromic materials.

4. Device according to claim 1, wherein the switchable element (8, 19, 38, 54, 71) is a liquid crystal display (LCD) or an independently controlled segment of an LCD.

5. Device according to any one of claims 1 to 4, wherein the switchable element (8, 19, 38, 54, 71) comprises at least one light shutter.

6. Device according to any one of claims 1 to 5, wherein the switchable element (8, 19, 38, 54, 71) comprises at least two polarization filters, one of which being fixed and the other one being turnable in its plane.

7. Device according to any one of claims 1 to 6, further comprising two or more internal spaces (3) and two or more windows (5), wherein at least two of the internal spaces are each provided with at least one window (5), and wherein the at least one switchable element (8) of each window (5) is switchable independently.

8. Device according to any one of claims 1 to 6, wherein the container (72) comprises two or more cavities (74) designed to hold the at least one chemical and/or biological sample, each cavity (74) being provided with at least one window (70), and wherein the at least one switchable element (71) of each window (70) is switchable independently.

9. Device according to any one of claims 1 to 8, further comprising at least one illumination means (10, 24, 44, 57, 77) for illuminating the chemical and/or biological sample in the internal space (3, 16, 31, 51, 61).

10. Device according to claim 9, wherein the illumination means (10, 24, 44, 57, 77) comprises at least one light emitting diode (LED).

11. Device according to any one of claims 1 to 10, wherein the switchable element (8, 19, 38, 54, 71) comprises or is coupled with at least one control element (42) for controlling the illumination means (10, 24, 44, 57, 77) and/or the illumination of the chemical and/or biological sample in the internal space (3, 16, 31, 51, 61).

12. Device according to any one of claims 1 to 11, wherein the wall element (32, 62) comprises at least two parts (33, 34, 63, 64) that are attached to each other by at least one interlockable connecting structure (35, 65) comprising a light-tight but gas-permeable opening (36, 66).

13. Device according to claim 12, wherein the opening (36, 66) is a meander-shaped channel.

14. Device according to claim 12 or 13, wherein the opening (36, 66) comprises at least one gas-permeable filter element.

15. Method for controlling an exposure of at least one chemical and/or biological sample to light, wherein the sample is protected from light by at least one light-proof material and can be observed and/or illuminated through at least one window, **characterized in that** color and/or light transmittance of the window is changed by means of at least one control unit, wherein said color, light transmittance and/or transparency can be switched between at least two states, a first state preventing light exposure of the sample and at least one second state allowing the exposure of the sample to light.
